# EUROPÄISCHE PATENTSCHRIFT

(11) **EP 1 905 920 B1**
(45) Veröffentlichungstag und Bekanntmachung des Hinweises auf die Patenterteilung: **14.01.2009**
(21) Anmeldenummer: 06020221.5
(22) Anmeldetag: 27.09.2006
(51) Int. Cl.: E04F 15/18, F24D 3/14, E04F 15/08

(54) **Fußboden mit Fußbodenheizung**
Floor with floor heating
Plancher avec plancher chauffant

(43) Veröffentlichungstag der Anmeldung: 02.04.2008
(73) Patentinhaber: Thomas, Tanja, 31840 Fischbeck (DE)
(72) Erfinder: Mertens, Antonius, 31840 Fischbeck (DE)
(74) Vertreter: Flosdorff, Jürgen

(56) Entgegenhaltungen:
- EP-A2- 0 386 324
- WO-A-20/05045152
- DE-A1- 3 032 163
- DE-A1- 10 159 340
- DE-U1- 8 814 650

## Beschreibung

Die Erfindung betrifft einen Fußboden mit einer Fußbodenheizung gemäß dem Oberbegriff des Patentanspruchs 1.

Bei der Fußbodenheizung handelt es sich um ein Trockensystem, bei dem die Heizrohre im Gegensatz zu einem Naßsystem nicht in die Mörtel- oder Estrichschicht (nachfolgend der Einfachheit halber nur noch als "Estrichschicht" bezeichnet) eingebettet, sondern von dieser räumlich getrennt angeordnet sind. In der Dämmschicht sind hierzu die nach oben offenen Kanäle ausgebildet, deren Innenwände von Wärmeleitblechen überdeckt sind, die sich auch über die zwischen den Kanälen liegenden Oberflächen der Dämmschicht erstrecken. Über den Wärmeleitblechen wird eine über die gesamte Fläche sich erstreckende Folie, vorzugsweise eine Vliesfolie, angeordnet, die die eigentliche Fußbodenheizung gegenüber der aufzubringenden Estrichschicht abdichtet, so dass kein Wasser in den Bereich der Heizrohre und der Dämmschicht eindringen kann.

Bei herkömmlichen Fußbodenverbundkörpern von Fußbodenheizungssystemen hat die Estrichschicht eine Mindestdicke von 45 mm über den Heizrohren. Dies bringt zahlreiche Nachteile mit sich wie erhebliches Schrumpfen der Estrichschicht beim Trocknungsvorgang, Verwölbungen der Estrichschicht aufgrund der Temperaturunterschiede innerhalb der Estrichschicht sowie lange Trocknungszeiten von mindestens 8 bis 30 Tagen, die die Fertigstellung des Bodens erheblich verzögern. Außerdem sind alle 8 m Seitenlänge oder ab 40 qm Flächenmaß zusätzliche Dehnungsfugen erforderlich, damit die Estrichplatte nicht unter Ausbildung von Rissen auseinander bricht. Auftretende Scherspannungen zwischen dem Estrich und dem darauf angeordneten Belag können dann, wenn der Belag aus starrem Material wie z.B. Fliesen besteht, zu dessen Ablösen und möglicherweise zu dessen Zerbrechen führen.

Ein weiteres Problem herkömmlicher Fußbodenverbundkörper besteht darin, dass die dicke Estrichplatte als Wärmespeicher mit langer Aufheiz- und Abkühlzeit wirkt. Dies hat einen großen Energieverbrauch bei geringem Heizkomfort zur Folge, da es sehr lange dauern kann, einen kalten Raum auf eine angenehme Raumtemperatur zu erwärmen und einen überheizten Raum wieder in dem gewünschten Maße abkühlen zu lassen.

DE 30 32 163 A1 offenbart einen Fußboden mit einer Fußbodenheizung der eingangs genannten Art. Bei diesem Fußboden sind die Wärmeleitbleche mit einer doppellagigen PE-Folie abgedeckt, wodurch auch bei plastischer Konsistenz des Frischmörtels dessen Eindringen in die Mulden sicher vermieden ist. Außerdem enthält der vorbekannte Fußboden eine Estrichschicht mit einer Dicke von nur 20 mm. Diese geringe Dicke wird dadurch erreicht, dass dem Estrich Stahlfasern zugemischt sind, die die Festigkeit der Estrichschicht so erhöhen, dass die übliche Estrichschichtdicke ohne Stahlfasern mit einer Dicke von 45 mm auf diese 20 mm verringert werden kann.

WO 2005/045152A1 offenbart ein mehrschichtiges Entkopplungs-, Abdichtungs- und Drainagesystem für die Verlegung keramischer Beläge im Dünnbettverfahren. Dabei werden die keramischen Beläge, insbesondere Fliesen, in eine dünne Klebeschicht aus einem Fliesenmörtel verlegt. Die Druckschrift befasst sich dabei mit der Verarbeitung der Fliesen im Außenbereich, wo die Fliesen Regenwasser und Feuchtigkeit aufgrund unterschiedlicher Temperaturen der Umgebung ausgesetzt sind. Das Regenwasser oder die sich niederschlagende Feuchtigkeit dringt durch die Fliesen in deren Unterbau ein und kann zu einer Ablösung der Fliesen führen. Zur Lösung dieses Problems wird ein spezieller Schichtaufbau mit einer Drainageschicht offenbart, aus der eingedrungenes Wasser abgeführt wird. Bei diesem vorbekannten mehrschichtigen System liegt der Fliesenmörtel auf einer Armierungsschicht auf, unter der sich eine Verankerungsschicht aus sich kreuzenden Einzelstäben befindet. Dabei kann die Armierungsschicht aus einem gitterartig angeordneten Glasfasergewebe bestehen, das Öffnungen aufweist, damit der Fliesenmörtel möglichst tief in die Verankerungsschicht eintreten kann, womit der Fliesenmörtel an dem Unterbau verankert ist. Unter der Verankerungsschicht liegt eine flüssigkeitsdurchlässige Vliesschicht, unter der wiederum eine Drainageschicht angeordnet ist, die dieselbe gitterartige Struktur wie die Verankerungsschicht hat. Durch diesen Aufbau kann sich kein Wasser unter den Fliesen ansammeln, da dieses aus der gitterartigen Drainageschicht seitlich abfließen kann.

EP-A2-0386324 offenbart einen bituminösen Haftvermittler zum Verlegen von Fliesen oder zum Auftragen von Putz. Die Druckschrift schlägt vor, dass der Haftvermittler die Form einer Bahn aus einer kaltklebenden, bituminösen Schicht hat, deren Unterseite auf dem Untergrund dauerhaft haftet und auf deren Oberseite eine weitere Schicht aus einem eine Reliefstruktur aufweisenden Material aufkaschiert ist. Diese Schicht kann zweilagig sein und aus einem Vlies oder einem Gewebe oder einer Folie als untere Lage und aus einer oberen gitterförmigen Lage bestehen. Die so gebildete Reliefstruktur bietet einen guten Haftgrund für einen Dünnbettfliesenkleber.

Der vorliegenden Erfindung liegt die Aufgabe zugrunde, eine Fußbodenheizung des Trockensystems so zu verbessern, dass die oben genannten Probleme weitgehend verringert oder ganz beseitigt sind. Insbesondere soll erreicht werden, dass die Fußbodenheizung eine schnellere Regelbarkeit der Gebäudeinnentemperatur ermöglicht, und dass die Trocknungszeit der Estrichschicht verringert ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Estrichschicht auf eine Kunststoffmatte aufgebracht ist und dass die Estrichschicht nur eine Dicke von mindestens 5 bis maximal 20 mm aufweist.

Die Kunststoffmatte hat eine gitterartige Struktur mit Aussparungen, in die der Estrich beim Gießen eintritt, so dass sich eine feste Verbindung zwischen der Matte und der Estrichschicht ergibt. Hierdurch erhöht sich die Tragkraft der Estrichplatte erheblich, so dass die Schicht nur eine Dicke zwischen 5 und 20 mm haben muss, um ihre Lastverteilungsfunktion sicher erfüllen zu können. Die Matte besteht aus einem mehrlagigen Glasgittergewebe und hat die gitterähnliche Struktur mit Aussparungen vorzugsweise in der Größe von 1 bis 8 mm. Die Höhe der Matte liegt vorzugsweise im Bereich von 2 bis 10 mm.

Die dünne Estrichschicht erhärtet sehr schnell, bevorzugt mit einer Trocknungszeit innerhalb von 24 Stunden, so dass der Oberbelag bereits nach 24 Stunden aufgebracht, vorzugsweise auf die Estrichschicht aufgeklebt werden kann. Dabei kann auch vorgesehen sein, dass eine weitere Matte oben auf die (noch nicht abgebundene) Estrichschicht aufgebracht werden kann.

Der Verbund der dünnen Estrichschicht mit der Kunststoffmatte hat kleinere Verformungen zur Folge, wodurch die Ausbildung von Dehnungsfugen unnötig ist. Von besonderer Bedeutung für den Komfort der erfindungsgemäßen Heizung ist, dass die Heizrohre die Raumluft vier- bis sechsmal so schnell wie beim Stand der Technik erwärmen kann, wodurch eine schnelle Regelbarkeit der Gebäudeinnentemperatur ermöglicht ist. Hierdurch sind auch wesentlich längere Temperaturabsenkungen bei Nacht möglich, mit der Folge beträchtlicher Energieeinsparungen. Damit ist die Erfindung ideal geeignet für eine Wärmepumpenheizung.

Damit wirkt die Estrichplatte nicht mehr wie der klassische Wärmespeicher, sondern wie ein schnell regulierbarer Heizkörper. Ein weiterer Vorteil des erfindungsgemäßen Fußbodensystems besteht darin, dass es preiswerter herstellbar ist.

Die über den Wärmeleitblechen liegende Folienschicht, die vorzugsweise aus einer einzigen, ganzflächig die Fußbodenheizung überdeckenden Vliesfolie besteht, schützt den darunter liegenden Bereich gegen das Eindringen von Wasser. Die Estrichschicht "schwimmt" in Folge der Folienschicht auf der darunter liegenden Fußbodenheizung. Die Matte liegt dabei auf der Folienschicht auf.

Weiter ist mit Vorteil vorgesehen, dass die Mörtel- oder Estrichschicht aus Zement, Alphahalbhydrat und Fließestrichkalziumsulfat besteht, wobei das fertige Gemisch selbstnivellierend ist.

Der erfindungsgemäße Fußboden ist mit seinem sehr dünnschichtigen Aufbau der Lastverteilungsschicht sowohl im Altbau als auch im Neubau einsetzbar und bringt einen hohen Wohnkomfort bei deutlich verringerten Einbau- und Heizkosten mit sich.

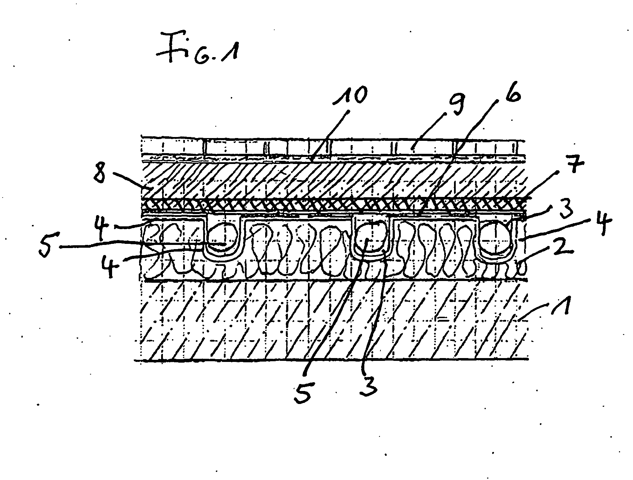

Weitere Eigenschaften der Erfindung ergeben sich aus der nachfolgenden Beschreibung einer bevorzugten Ausführungsform der Erfindung. Dabei zeigt Figur 1 einen Vertikalschnitt durch einen Bereich eines auf einer Betondecke oder einer Holzbalkendecke aufliegenden Fußbodens mit einer Fußbodenheizung.

In Figur 1 ist eine Ausführungsform eines erfindungsgemäßen Fußbodenaufbaus im Dünnschichtensystem mit Fußbodenheizung dargestellt. Auf einem tragenden Untergrund 1, der beispielsweise aus einer Betondecke oder einer Holzbalkendecke besteht, liegt eine Polystyrolschicht 2 auf, die eine Dicke von bevorzugt etwa 30 mm hat. Im oberen Teil der Polystyrolschicht sind im Querschnitt halbrunde bzw. etwa halbkreisförmige Kanäle 3 ausgebildet, deren Wände von Wärmeleitblechen 4 überdeckt sind, die auch die zwischen den Kanälen 3 verbleibende Oberfläche der Polystyrolschicht 2 teilweise überdecken.

In den Kanälen 3 sind Heizungsrohre 5 angeordnet, die vorzugsweise aus Kunststoff bestehen. Der Rohrdurchmesser beträgt 6 bis 2 mm, während der Rohrabstand 5 bis 30 cm beträgt.

Auf den Wärmeleitblechen 4 liegt eine Vliesfolie 6 auf, die beispielsweise aus PE besteht und eine Dicke von etwa 100 bis 300 µm haben kann. Diese Folie 6 überdeckt ganzflächig den darunter liegenden Aufbau der Fußbodenheizung und dichtet diesen zuverlässig gegen den Eintritt von Wasser ab.

Auf der Folienschicht 6 liegt eine Kunststoffmattenschicht 7 auf, die eine spezielle Gitterstruktur mit Stegen und durchgehenden Hohlräumen zwischen den Stegen besitzt. Diese Matte 7 ist mit der darauf aufgebrachten Estrichschicht 8 verbunden und hat die Wirkung, dass die mineralisch abgebundene Estrichschicht 8 eine erheblich erhöhte Biegefestigkeit und Tragkraft hat, weshalb ihre Dicke erfindungsgemäß auf 5 bis maximal 20 mm reduziert ist. Trotz ihrer geringen Dicke erfüllt die Estrichschicht ihre Aufgabe zum gleichmäßigen Einleiten von Belastungskräften über die Zwischenlage der Fußbodenheizung in den tragenden Untergrund.

In einer alternativen Ausführungsform wird zusätzlich zu den Wärmeleitblechen eine ganzflächig verzinkte Blechabdeckung auf den Wärmeleitblechen angeordnet, wodurch eine noch gleichmäßigere Temperaturverteilung und eine erhöhte Tragfähigkeit erreicht werden.

Unter "Estrich" wird im Rahmen der Erfindung jedes breiartige Gemisch aus Wasser, Sand und/oder sonstigen Zuschlagsstoffen zur Erhärtung mit einem Bindemittel wie beispielsweise Zement oder Gips, verstanden, aus denen sich Estrich- und Mörtelschichten herstellen lassen.

Auf der Estrichschicht 8 liegt ein Belag 9 auf, der beispielsweise ein nachgiebiger Teppichboden sein kann oder z.B. aus starren Fliesen besteht. Der Belag 9 ist mittels eines Klebers 10 auf die Estrichschicht 8 aufgeklebt.

Der Gesamtaufbau des Systems hat eine Dicke von 35 bis 70 mm (ohne den tragenden Untergrund). Die Wärmeverteilung ist gleichmäßig.

## Patentansprüche

1. Fußboden mit einer Fußbodenheizung, mit einer Wärmedämmschicht (2), die Kanäle (3) aufweist, in denen Heizrohre (5) und Wärmeleitbleche (4) angeordnet sind, die wenigstens teilweise die Wärmedämmschicht (2) zwischen den Kanälen (3) überdecken, mit einer Folienschicht (6), die auf den Wärmeleitblechen (4) aufliegt und ganzflächig den darunter liegenden Aufbau des Fußbodens überdeckt und wasserdicht abdichtet, ferner mit einer oberen Mörtel- oder Estrichschicht (8), auf der ein Bodenbelag (9) aufliegt,
**dadurch gekennzeichnet,**
**dass** auf der Folienschicht (6) eine Kunststoffmattenschicht (7) aufliegt, die eine Gitterstruktur hat mit Stegen und durchgehenden Hohlräumen zwischen den Stegen und aus einem mehrlagigen Glasgittergewebe besteht, wobei die Mörtel- oder Estrichschicht (8) auf das mehrlagige Glasgittergewebe aufgebracht ist, und
**dass** die Mörtel- oder Estrichschicht (8) eine Dicke von 5 bis maximal 20 mm aufweist.

2. Fußboden nach Anspruch 1,
**dadurch gekennzeichnet,**
**dass** die Folienschicht (6) aus einer durchgehenden Vliesfolie besteht.

3. Fußboden nach einem der Ansprüche 1 oder 2,
**dadurch gekennzeichnet,**
**dass** die Mörtel- oder Estrichschicht (8) aus Zement, Alphahalbhydrat und Fließestrichkalziumsulfat besteht, wobei das fertige Gemisch selbstnivellierend ist.

## Claims

1. A floor with a floor heather including a thermal insulation layer (2), which affords passages (3), in which heating pipes (5) and thermal conduction plates (4) are arranged, which cover the thermal insulation layer (2) between the passages (3), at least partially, a film layer (6), which rests on the thermal conduction plates (4) and covers the entire area of the construction of the floor situated beneath it and seals it in a water tight manner, and also an upper mortar or screed layer (8), which rests on a floor covering (9), **characterised in that** resting on the film layer (6) there is a plastic mat layer (7), which has a mesh structure with webs and cavities which pass through between the webs and consists of a multi-layer glass mesh fabric, wherein the mortar or screed layer (8) is applied to the multi-layer glass mesh fabric and that the mortar or screed layer (8) has a thickness of 5 to at most 20mm.

2. A floor is claimed in claim 1, **characterised in that** the film layer (2) consists of a continuous fleece film.

3. A floor is claimed in one of claims 1 or 2, **characterised in that** the mortar or screed layer (8) consists of cement, alpha hemihydrate and flowable screed calcium sulphate, whereby the final mixture is self-levelling.

## Revendications

1. Plancher avec un plancher chauffant, avec une couche calorifuge (2), qui présente des canaux (3), dans lesquels sont disposés des tubes chauffants (5) et des tôles conductrices de chaleur (4), qui recouvrent au moins partiellement la couche calorifuge (2) entre les canaux (3), avec une couche de feuille (6) qui repose sur les tôles conductrices de chaleur (4) et recouvre sur toute la face la constitution située en dessous du plancher et la rend étanche à l'eau, en outre avec une couche supérieure de mortier ou de chape (8) sur laquelle repose un revêtement de sol (9),
**caractérisé en ce que**
repose sur la couche de feuille (6) une couche de nappe en matériau synthétique (7) qui possède une structure de grille avec des nervures et des espaces creux traversants entre les nervures et consiste en un tissu de grille en verre multicouche, où la couche de mortier ou de chape (8) est appliquée sur le tissu de grille en verre multicouche, et
**en ce que** la couche de mortier ou de chape (8) présente une épaisseur de 5 jusqu'au maximum 20 mm.

2. Plancher selon la revendication 1,
**caractérisé en ce que**
la couche de feuille (6) consiste en une feuille de nappe continue.

3. Plancher selon l'une des revendications 1 ou 2,
**caractérisé en ce que**
la couche de mortier ou de chape (8) est réalisée en ciment, alfa demi-hydrate et sulfate de calcium fluidifié pour chape, où le mélange fini est à auto-nivellement.
